# EUROPEAN PATENT APPLICATION

(11) **EP 1 889 545 A1**
(43) Date of publication of application: **20.02.2008**
(21) Application number: 07112366.5
(22) Date of filing: 12.07.2007
(51) Int. Cl.: A23C 21/02, A23C 1/04, A23C 19/09, A23L 1/00, A23L 1/182

(54) **Filled Cheese Product and Manufacture Thereof**

(30) Priority: 17.08.2006 EP 06254330
(71) Applicant: UNILEVER PLC, London EC4P 4BQ (GB); UNILEVER N.V., 3013 AL Rotterdam (NL)
(72) Inventor: Di Domenico, Roberto, 00199, Rome (IT); Panaioli, Sandro, Via Appia Km. 55.300 04012, Cisterna di Latina (IT); Treggiari, Massimiliano, Via Appia Km. 55.300 04012, Cisterna di Latina (IT)
(74) Representative: Acham, Nicholas Clive

(57) **Abstract**

Cheese is particularly well adapted for certain applications, such as for example as a pizza topping, where there is a need for the cheese to melt and flow when heated. Conversely this property makes cheese particularly unsuited to pan-fried or oven cooked products where shape-retention is important.

The aforementioned problem is solved by providing a food composition consisting of:
a) 80-90% by weight of a cheese mixture; and
b) 10-20% by weight starch, modified starch, cellulose, modified cellulose, gum, carrageenan, pectin, gelatin, agar, calcium cross-linking agents, phosphate cross-linking agents, enzyme cross-linking agents or a mixture thereof,

wherein the cheese mixture consists of:
c) 50-80% by weight Mozzarella cheese; and
d) 20-50% by weight Emmental cheese.

## Description

This invention relates to a filled cheese product and manufacture thereof, in particular to filled cheese products which are pan-fried from frozen.

Cheese is particularly well adapted for certain applications, such as for example as a pizza topping, where there is a need for the cheese to melt and flow when heated. Conversely this property makes cheese particularly unsuited to pan-fried or oven cooked products where shape-retention is important. In particular in order to reheat a frozen food composition so that the core temperature of the food composition reaches 70 degrees Centigrade, the food composition must be pan-fried for seven minutes or oven cooked for ten minutes at 220 degrees Centigrade.

DE 102 27 747 A1 discloses a cookable food product with a centre consisting of an edible material composition and an envelope consisting of a second edible material composition, wherein the second edible material composition retains its consistency in a domestic cooking process, characterised in that the second edible material composition comprises one or more layers and at least the outer layer is a material that does not melt in a cooking process. Advantageously, the outer layer consists of a cheese material prepared from milk by the conventional cheese-making method using rennet, but wherein the use of lactic-acid bacterial cultures is omitted and the bacterial flora is inactivated in a heating step. A commercially-available cheese material useful for the cookable food product of the invention is halloumi.

US 2003/0003194 A1 discloses a food product obtained by extrusion baking of a mixture of dairy or cheese origin with a fibrous structure characterized in that the fibers form a network of macroscopic fibers whose diameters are in the order of 0.1 mm to 1 mm, ramified into microscopic fibers with diameters in the order of 1µm to 0.1 mm, with the dry matter of the product at least partially originating from whey.

EP 0 792 105 B1 discloses a convenience food product of the finger type having as its major constituent a Halloumi-type cheese which is finely grated and re-formed, preferably with a binder, and of the manfacture of such a food.

FR 2 867 951 A1 discloses a process for production of cheeses, especially soft cheeses made from goats' milk with an inner filling, which comprises curdling, moulding, drying, unmoulding and packing stages, includes a stage in which the cheese is injected with a filling. The filling is of a culinary substance made from citrus fruits, vegetables and/or spices, injected through a cannula by a dosing pump, the cannula being fitted with a guard to control its penetration depth. Following the injection the cannula is withdrawn and the hole in the cheese is closed by the elasticity of the cheese or with a quantity of fresh clotted cheese. The injection process avoids the need to cut the cheese or leave marks afterwards.

JP 07 298834 A discloses a cheese capable of giving workability, heat resistance, freeze resistance, shape retention, etc., to a soufflé cheese cake and useful for mass production of soufflé cheese cakes by blending a plant-derived water-soluble hemicellulose and an (organic acid) monoglyceride.

EP 1 559 329 A2 discloses a frozen food product comprising a rice composition including partially cooked rice, the rice composition forming an envelope, said envelope filled with a sauce component, the sauce component being distributed along the full length of the envelope.

### Brief Description of the Invention

The inventors have solved the aforementioned problem by providing in one aspect of the invention a food composition consisting of:
a) 80-90% by weight of a cheese mixture; and
b) 10-20% by weight starch, modified starch, cellulose, modified cellulose, gum, carrageenan, pectin, gelatin, agar, calcium cross-linking agents, phosphate cross-linking agents, enzyme cross-linking agents or a mixture thereof,
   wherein the cheese mixture consists of:
c) 50-80% by weight Mozzarella cheese; and
d) 20-50% by weight Emmental cheese.

A particular advantage of the aforementioned food composition is that it consists of natural cheeses rather than processed substitute or imitation cheeses. It has been observed that the cheese mixture must consist of at least 50% by weight Mozzarella cheese in order for the food composition to retain the stringy characteristic of Mozzarella cheese. It has been further observed that the combination of starch (or modified starch or a mixture thereof) and Emmental cheese provides the food composition with shape retention when heated. Furthermore use of more than 20% by weight starch, modified starch or a mixture thereof in the food composition has a detrimental effect on the flavour of the resulting product.

The starch, modified starch, cellulose, modified cellulose, gum, carrageenan, pectin, gelatine and agar are believed to assist shape retention at high temperature by binding and thereby retaining water within the food composition. They are also thought to operate by controlling the viscosity of the food composition with good heat setting properties (rapid viscosity increases on cooling) being particularly preferred.

The starch or modified starch may be selected from the group consisting of rice starch, tapioca starch, potato starch, corn starch, wheat starch, cross-linked starch, dextrin, polydextrin, maltodextrin, carboxymethyl starch, carboxyethyl starch, carboxypropyl starch, starch acetate and oxidized starch. Preferably the starch is rice starch.

The calcium cross-linking agents, phosphate cross-linking agents and enzyme cross-linking agents are thought to assist shape retention at high temperature by promoting interactions between protein molecules through cross-linking or aggregation.

Suitable cross-linking agents include calcium chloride, calcium phosphate, calcium carbonate, calcium sulphate, sodium hexametaphosphate, monosodium phosphate, sodium tripolyphosphate, disodium phosphate, trisodium phosphate and transglutaminases.

In another aspect of the invention, a food product is provided comprising the food composition of the invention and a filling, the food composition formed into an envelope filled with the filling, the filling distributed along the full length of the envelope.

The filling may be selected from the group consisting of cheese, honey, pear, apple, jam, marmalade, tomato ketchup, vegetables, meat, fish, butter, the cheese not being selected from Mozzarella or Emmental.

In a further aspect of the invention, a process for manufacturing the food product of the invention comprising the steps of:
a) Mincing Mozzarella and Emmental cheese thereby to produced minced Mozzarella and Emmental cheese;
b) Kneading the minced Mozzarella and Emmental cheese with starch thereby to produce the food composition of the invention;
c) Coaxially co-extruding the food composition of the invention and filling thereby to form a continuous extrudate, the food composition of the invention lying radially exterior to the filling;
d) Cutting the continuous extrudate into uniform portions; and
e) Mechanically forming the uniform portions into formed portions of the desired shape

By "mechanically forming" is meant that the uniform portions are permanently deformed in at least two dimensions, preferably at least three dimensions. Preferably the uniform portion is deformed in at least one dimension by at least 5%, preferably 10%, most preferably 20% of the un-formed dimension.

An advantage of coaxially co-extruding the food composition of the invention and filling is that the consumer enjoys a mouthful of food composition and filling with every bite of the food product.

Preferably the Mozzarella and Emmental cheeses are minced to less than or equal to 15mm, preferably 10mm, most preferably 8mm diameter pieces.

The process may comprise the additional step of coating the formed portions with batter thereby to produce battered formed portions.

The process may further comprise the additional step of coating the battered formed portions with breadcrumb thereby to produce battered formed portions coated in breadcrumb.

The process may further comprise the additional step of cooking battered formed portions coated in breadcrumb thereby to produce cooked battered formed portions coated in breadcrumb.

The process may also comprise the additional step of freezing cooked battered formed portions coated in breadcrumb.

Optionally the step of mechanically forming the formed portions may preserve the longitudinal dimension of the filling present before forming. One advantage of such a forming operation is that it minimises the deformation of the sauce component. This is particularly advantageous where the sauce component lacks formability because it is, for example, elastic.

### Summary of the Drawings

The invention is exemplified hereinbelow with reference to the figures where:
- Figure 1: shows top (a), side (b), perspective (c) and end (d) views of a food product in accordance with the invention;
- Figure 2: shows the forming operation of a process of manufacturing a food product in accordance with the invention; and
- Figure 3: shows a food product according to the invention (a) and food products falling outside the scope of the invention ((b) and (c)).

### Detailed Description of the Invention

### Example 1

The food product consists of the following in percentage weight:

| | |
|---|---|
| Food composition | 60 |
| Sauce | 13 |
| Batter | 14 |
| Breadcrumb | 13 |

More specifically, the food composition consists of the following in percentage weight:

| | |
|---|---|
| Mozzarella cheese | 70 |
| Emmental cheese | 18 |
| Rice starch | 12 |

The batter consists of the following in percentage weight:

| | |
|---|---|
| Wheat flour | 16.6500 |
| Rice flour | 11.1000 |
| Starch wheat | 3.3300 |
| Salt | 2.5900 |
| Dextrose | 1.8300 |
| Wheat protein | 1.4800 |
| Water | 63.0000 |

The breadcrumbs consist of the following in percentage weight:

| | |
|---|---|
| Wheat flour | 95.9200 |
| Salt | 1.7000 |
| Raising agent | 1.2000 |
| Natural yeast | 0.2000 |
| Paprika | 0.6300 |
| Malt extract | 0.0300 |
| Skimmed milk powder | 0.3200 |

The raising agent consists of sodium bicarbonate and sodium diphosphate and is available from Vaessen-Schoenmaker.

The Mozzarella and Emmental cheeses are minced or diced to 8mm diameter pieces and mixed in a kneader together with the rice starch.

The batter and breadcrumbs are prepared by mixing the aforementioned listed ingredients.

The filling is coaxially co-extruded with the food composition at 6°C, the food composition nand filling forming a continuous extrudate. The extrudate then passes through a cutting machine which cuts the extrudate into portions of uniform length and separates each portion one from the other. Separation is achieved by placing the cutting operation between two endless belt conveyors arranged in series and operating the upstream conveyor at a slightly lower belt speed than the downstream conveyor.

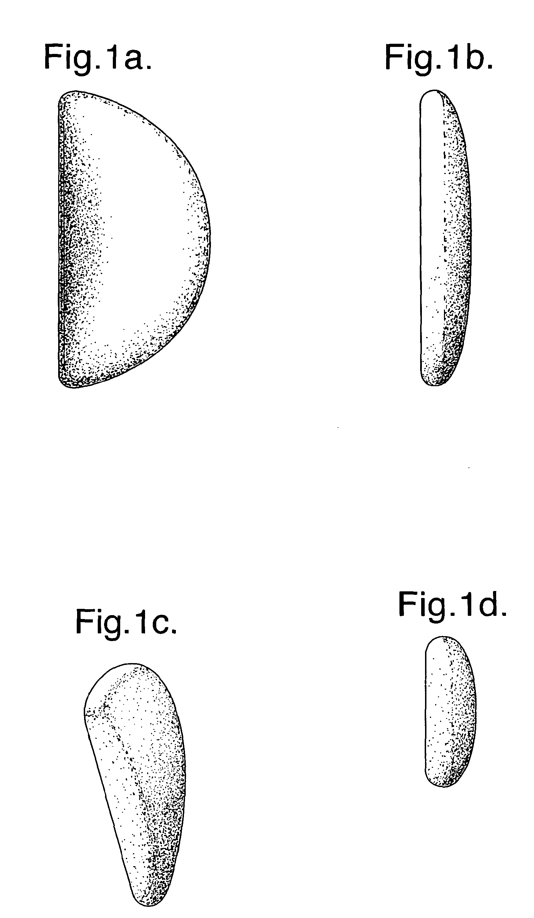

The portions then enter a mechanical forming machine (Masterform^{™} from Nijal SA) where they are individually formed into a characteristic half-moon shape which is illustrated in Figures 1a to 1d.

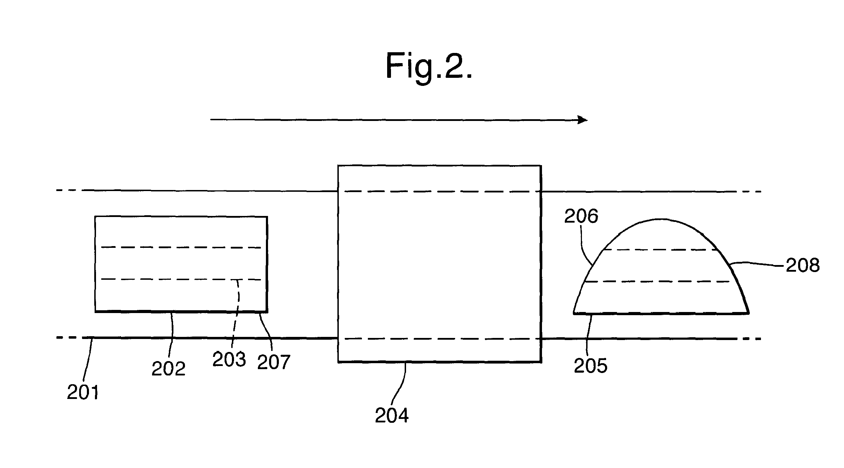

This is accomplished as shown in Figure 2 which shows an endless belt conveyor (201) conveying portions (202) in the direction indicated by the arrow. The portions (202) comprise food composition (207) filled with filling (203), the filling (203) arranged longitudinally and thus in parallel with the direction of movement of the conveyor.

The conveyor (201) conveys each portion (202) into the mechanical forming machine (204) where it is formed into the characteristic half-moon shape (205). The orientation of the filling (203) is preserved with filling just visible at opposing ends of the formed portions (206, 208). The forming operation is executed in such a manner as to preserve the longitudinal dimension of the portion before and after forming.

Thereafter, the moulded portions are coated successively in batter and breadcrumbs before being deep-fried at 180 degrees Centigrade for 45 seconds. The moulded portions emerge from the deep fryer semi-cooked and are then stored at -18°C ready for transhipment.

The consumer then prepares the frozen food products for consumption either by pan-frying them for seven minutes or oven cooking them for ten minutes at 220 degrees Centigrade.

### Example 2

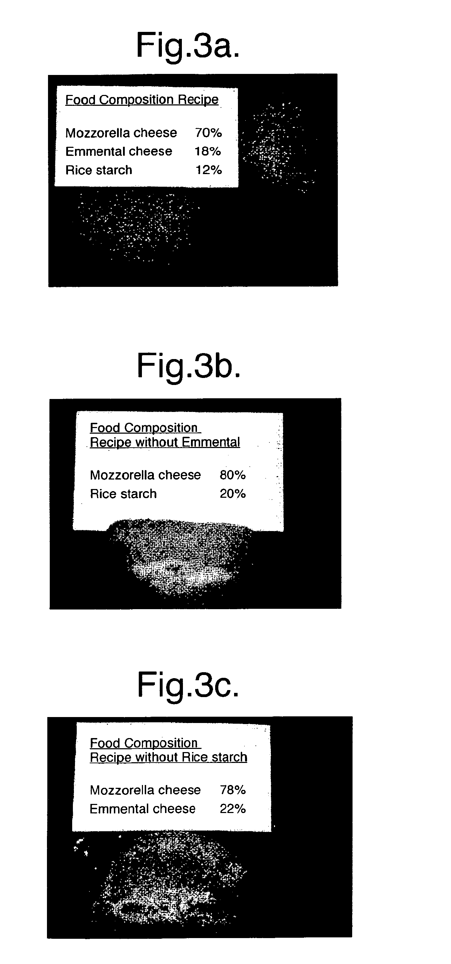

Figure 3a shows the food product of example 1 prepared with a food composition consisting of 70% by weight Mozzarella cheese, 18% by weight Emmental cheese and 12% by weight rice starch and thus according to the invention. The food product has retained its shape after frying.

Figure 3b shows the food product of example 1 prepared with a food composition consisting of 80% by weight Mozzarella cheese and 20% by weight rice starch and thus falling outside the scope of the invention. The food product has not retained its shape after frying.

Figure 3c shows the food product of example 1 prepared with a food composition consisting of 78% by weight Mozzarella cheese and 22% by weight Emmental cheese and thus falls outside the scope of the invention. The food product has not retained its shape after frying.

## Claims

1. A food composition consisting of:
a) 80-90% by weight of a cheese mixture; and
b) 10-20% by weight starch, modified starch, cellulose, modified cellulose, gum, carrageenan, pectin, gelatin, agar, calcium cross-linking agents, phosphate cross-linking agents, enzyme cross-linking agents or a mixture thereof,
wherein the cheese mixture consists of:
c) 50-80% by weight Mozzarella cheese; and
d) 20-50% by weight Emmental cheese.

2. A food composition according to claim 1 wherein the starch or modified starch is selected from the group consisting of rice starch, tapioca starch, potato starch, corn starch, wheat starch, cross-linked starch, dextrin, polydextrin, maltodextrin, carboxymethyl starch, carboxyethyl starch, carboxypropyl starch, starch acetate and oxidized starch.

3. A food product comprising a food composition according to claim 1 or claim 2 and a filling, the food composition formed into an envelope filled with the filling, the filling distributed along the full length of the envelope.

4. A food product according to claim 3 wherein the filling is selected from the group consisting of cheese, honey, pear, apple, jam, marmalade, tomato ketchup, vegetables, meat, fish, butter, the cheese not being selected from Mozzarella or Emmental.

5. A process for manufacturing a food product according to claim 3 or claim 4 comprising the steps of:
a) Mincing Mozzarella and Emmental cheese thereby to produced minced Mozzarella and Emmental cheese;
b) Kneading the minced Mozzarella and Emmental cheese with starch thereby to produce a food composition according to claim 1 or claim 2;
c) Coaxially co-extruding the food composition according to claim 1 or claim 2 and filling thereby to form a continuous extrudate, the food composition according to claim 1 or claim 2 lying radially exterior to the filling;
d) Cutting the continuous extrudate into uniform portions; and
e) Mechanically forming the uniform portions into formed portions of the desired shape

6. A process according to 5 comprising the additional step of coating the formed portions with batter thereby to produce battered formed portions.

7. A process according to claim 6 comprising the additional step of coating the battered formed portions with breadcrumb thereby to produce battered formed portions coated in breadcrumb.

8. A process according to claim 7 comprising the additional step of cooking battered formed portions coated in breadcrumb thereby to produce cooked battered formed portions coated in breadcrumb.

9. A process according to claim 8 comprising the additional step of freezing cooked battered formed portions coated in breadcrumb.

10. A process according to any one of claims 5 to 9 wherein the step of mechanically forming the formed portions preserves the longitudinal dimension of the filling present before forming.
